# EUROPÄISCHE PATENTSCHRIFT

(11) **EP 1 653 701 B1**
(45) Veröffentlichungstag und Bekanntmachung des Hinweises auf die Patenterteilung: **25.01.2012**
(21) Anmeldenummer: 05109779.8
(22) Anmeldetag: 20.10.2005
(51) Int. Cl.: G06F 21/00, H04L 9/32

(54) **Verfahren, Vorrichtungen und Computerprogrammprodukt zur Überprüfung der Signaturen signierter Dateien und zur Konvertierung unsignierter Dateien**
Method, apparatuses and computer program product for verifying the signatures of signed files and for conversion of unsigned files
Méthode, appareils et logiciel pour la vérification des signatures de fichiers signés et pour la conversion de fichiers non signés

(30) Priorität: 29.10.2004 DE 102004052934
(43) Veröffentlichungstag der Anmeldung: 03.05.2006
(73) Patentinhaber: CompuGroup Medical AG, 56070 Koblenz (DE)
(72) Erfinder: Gotthardt, Frank, 56337, Eitelborn (DE)
(74) Vertreter: Richardt Patentanwälte

(56) Entgegenhaltungen:
- US-A- 5 579 393
- US-A1- 2002 007 453
- US-A1- 2002 016 925
- US-A1- 2003 229 810

## Beschreibung

Die Erfindung betrifft ein medizintechnisches Gerät, einen Konverter, ein Verfahren zur Eingabe einer Datei in ein Netzwerk sowie ein Computerprogrammprodukt.

Der Schutz von Netzwerken gegen das Eindringen von Computerviren hat einen hohen Stellenwert. Hierzu sind Programme zum Schutz gegen Computerviren bekannt, die neu empfangene Dateien auf bekannte Viren hin abscannen. Wird beispielsweise von einem Netzwerkserver eine E-Mail mit einem Virus empfangen, so wird dies durch das Virenschutzprogramm festgestellt und der Empfang der E-Mail wird automatisch abgelehnt. Ein Eindringen von mit bekannten Viren befallenen E-Mails in das Computernetzwerk kann dadurch verhindert werden.

Ein Nachteil vorbekannter Virenschutzprogramme ist, dass diese erst mit einer zeitlichen Verzögerung auf neu auftretende Computerviren reagieren können. Bei Auftreten eines neuen Computervirus muss zunächst ein Update für das Virenschutzprogramm erstellt werden, bevor dieses den neuen Virus identifizieren kann. In dem Zeitraum zwischen dem Auftreten des neuen Computervirus und dem entsprechenden Update des Virenschutzprogramms besteht daher kein Schutz eines Netzwerks gegen Virenattacken. Dies ist insbesondere hinsichtlich des Schutzes von vertraulichen und / oder personenbezogenen Daten ein Problem. Zur Lösung dieses Problems werden bislang Netzwerke, die solche besonders schutzbedürftigen Daten beinhalten, oft insular, das heißt ohne eine Anbindung an externe Netzwerke, wie zum Beispiel das Internet, betrieben.

Aus der US 2002/0066044A1 ist eine signatur-basierte Firewall bekannt. Ferner ist aus der EP 1039741 A2 ein Datenverarbeitungssystem für medizinische Daten mit einem Authentifizierungsgerät bekannt. Die US 2002/0016925 A1 offenbart ein Verfahren und System zur Kontrolle und Filterung von Dateien unter Verwendung von "Virus-Free"-Zertifikaten. Aus der US 2003/0229810 A1 ist ein Verfahren zur Verhinderung von Virusangriffen auf Computersysteme bekannt, bei welchem eingehende Daten in ein anderes Format konvertiert werden, um damit fragwürdige Daten bezüglich eventuell vorhandener Viren zu säubern.

Der Erfindung liegt dem gegenüber die Aufgabe zu Grunde, einen verbesserten Netzwerkknoten, einen Konverter für einen Netzwerkknoten, ein Verfahren zur Eingabe einer Datei in ein Netzwerk sowie ein entsprechendes Computerprogrammprodukt zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Netzwerkknoten zur Verknüpfung mit einem Netzwerk geschaffen. Der Netzwerkknoten dient zum Empfang einer Datei von einer Datenquelle, wobei die Datei mit einer maschinellen Signatur der Datenquelle versehen ist. Der Netzwerkknoten hat Mittel zur Überprüfung der Echtheit der Signatur und Mittel zur Eingabe der Datei in das Netzwerk, wenn die Signatur echt ist.

Aufgrund der maschinellen Signatur der Datei ist es möglich zu überprüfen, ob die Datei von einer zulässigen Datenquelle stammt. Ferner kann die Signatur auch zur Überprüfung der Unversehrtheit der Datei verwendet werden. Damit kann geprüft werden, ob die Datei frei von Manipulationen ist.

Zur maschinellen Signierung der Datei können verschiedenste Verfahren eingesetzt werden. Vorzugsweise kommt ein Verfahren zur digitalen Signierung beispielsweise mit einer symmetrischen oder asymmetrischen Verschlüsselung zum Einsatz. Die Erfindung wird aber nicht auf solche Verfahren eingeschränkt, sondern gilt für alle Verfahren von maschinellen Signaturen, welche die Echtheit und Unversehrtheit von Daten sichern.

Die Erfindung ermöglicht also den Einsatz von maschinellen Signaturen zum Schutz eines Netzwerks gegen das Eindringen unerwünschter Dateien. Insbesondere ermöglicht die Erfindung den Einsatz einer so genannten Sicherheitsinfrastruktur, wobei es sich bei den Teilnehmern an der Sicherheitsinfrastruktur erfindungsgemäß nicht um Personen, sondern um zertifizierte Datenquellen, das heißt beispielsweise medizintechnische Geräte oder andere Geräte handelt. Als Sicherheitsinfrastruktur kann z.B. eine sog. Public Key Infrastruktur (PKI) eingesetzt werden.

Nach einer Ausführungsform der Erfindung beinhaltet eine von einer zertifizierten Datenquelle generierte Datei Bilddaten. Nach der Erzeugung der Datei wird diese von dem Gerät selbst maschinell signiert. Vorzugsweise wird die maschinelle Signatur mit Hilfe eines in dem Gerät gespeicherten geheimen Schlüssels erzeugt.

Nach einer Ausführungsform der Erfindung ist der Datenquelle eine Gerätekennung zugeordnet. Die Gerätekennung kann beispielsweise aus einer Herstellerkennung, einer Typkennung und / oder einer Seriennummer zusammengesetzt sein. Insbesondere kann es sich bei der Gerätekennung um eine global eindeutige Kennung, das heißt einen so genannten Globally Unique Identifier (GUID) handeln.

Für die Gerätekennung einer für die Teilnahme an der Sicherheitsinfrastruktur zugelassenen Datenquelle wird ein so genanntes Sicherheitszertifikat erzeugt. Das Sicherheitszertifikat einer zugelassenen Datenquelle ermöglicht jedem Teilnehmer an der Sicherheitsinfrastruktur die Überprüfung der Echtheit von signierten Daten der Datenquelle. Dem Zertifikat ist eine geheime Komponente, wie z.B. ein geheimer Schlüssel, zugeordnet, die nur der Datenquelle bekannt ist und zur maschinellen Signatur von Daten verwendet wird. Die geheime Komponente wird vorzugsweise in einem nicht-flüchtigen Speicher, der untrennbar mit der Datenquelle verbunden ist, gespeichert. Das Zertifikat ist öffentlich und wird beispielsweise auf einem Verzeichnis-Server, das heißt einem so genannten Directory, gespeichert.

Nach einer weiteren Ausführungsform der Erfindung weist der Netzwerkknoten unsignierte Dateien oder Dateien mit ungültiger Signatur ab. Unsignierte Dateien können allerdings erforderlichenfalls mit einer speziellen Programmkomponente bei Bedarf konvertiert und signiert werden, bevor sie dem Netzwerkknoten zur Übertragung zugeleitet werden.

Die Konvertierung der Datei kann mittels einer Programmkomponente und / oder eines separaten Hardware-Moduls, welches an dem Netzwerkknoten angeschlossen ist, durchgeführt werden. Das Konverterprogramm bzw. das Konvertermodul sind für die Teilnahme an der Sicherheitsinfrastruktur zugelassen und haben ein entsprechendes Zertifikat, sowie eine nur ihnen bekannte geheime Komponente zur maschinellen Signatur. Für den Fall, dass eine unsignierte Datei vorliegt, wird also zunächst durch Prüfung festgestellt, ob die Datei in einem Format vorliegt, in dem die Datei keine unerwünschten Inhalte, wie zum Beispiel Viren, beinhaltet. Bei Bedarf wird die Datei in ein geeignetes Format konvertiert. Danach wird die konvertierte Datei mit der geheimen Konverter-Komponente maschinell signiert und dadurch für die Eingabe in das Netzwerk über den Netzwerkknoten freigegeben.

Vorzugsweise erfolgt die Signatur mit einer geheimen Komponente, die nur dem Signaturersteller bekannt ist, sei es Datenquelle oder Signiermodul. Die Überprüfung der Signatur erfolgt mit einem so genannten Zertifikat. In der Sicherheitsinfrastruktur sind die Zertifikate bekannt und können zur Überprüfung von Signaturen genutzt werden.

Nach einer Ausführungsform der Erfindung erfolgt zunächst eine Wiedergabe der unsignierten Datei durch ein Konverter-Modul. Unter einer Wiedergabe der Datei wird dabei ein so genanntes Rendering der Datei verstanden. Wenn es sich bei der Datei um eine Bilddatei handelt, wird die Datei durch das Rendering "entpackt", so dass man Bilddaten erhält, die in einem Bildspeicher gespeichert werden können. Aus den Bilddaten wird eine neue Datei erzeugt, die dann der Konverterkomponente digital signiert.

In einem weiteren Aspekt betrifft die Erfindung ein medizintechnisches Gerät, insbesondere ein diagnostisches Gerät, wie zum Beispiel ein Bild erzeugendes Gerät. Zum Beispiel handelt es sich bei dem erfindungsgemäßen medizintechnischem Gerät um ein Röntgengerät, welches digitale Röntgenbilder liefert, ein Ultraschallgerät, einen Computer-Tomographen oder einen Kernspin-Tomographen. Ferner kann es sich bei dem medizintechnischem Gerät auch um einen Wehenschreiber, ein EKG-Gerät oder ein anderes diagnostisches Gerät handeln.

Das erfindungsgemäße medizintechnische Gerät hat eine geheime Signaturkomponente, die vorzugsweise auf einem mit dem medizintechnischen Gerät fest verbundenem nicht-flüchtigen Speicher gespeichert ist. Nach der Erzeugung einer Datei durch das medizintechnische Gerät, wird die Datei mit der geheimen Komponente des medizintechnischen Geräts automatisch maschinell signiert. Die signierte Datei wird von dem medizintechnischen Gerät über eine Netzwerkschnittstelle ausgegeben. Alternativ oder zusätzlich kann die signierte Datei auch auf einem Datenträger gespeichert werden.

Nach einem weiteren Aspekt betrifft die Erfindung ein Verfahren zur Eingabe einer Datei in ein Netzwerk. Nach dem Empfang der Datei wird zunächst geprüft, ob es sich um eine signierte oder um eine unsignierte Datei handelt. Wenn es sich um eine signierte Datei handelt, so wird die Echtheit der Signatur verifiziert. Nur wenn die Datei authentisch ist, wird diese in das Netzwerk eingegeben.

Wenn eine Datei unsigniert ist, so wird sie geprüft und bei Bedarf konvertiert, um sicherzustellen, dass die Datei keine unerwünschten Inhalte hat. Die Konvertierung der Datei erfolgt vorzugsweise durch ein so genanntes Rendering der Datei und eine anschließende Erzeugung einer neuen Datei aus dem durch das Rendering erhaltenen Daten. Die neue Datei wird dann mit der geheimen Komponente des Konverters maschinell signiert und kann dann in das Netzwerk eingegeben werden.

Nach einer weiteren Ausführungsform der Erfindung dient ein Signiermodul zur digitalen Signierung von unsignierten Dateien, bevor sie vom Netzwerkknoten empfangen werden. Das Signiermodul prüft zunächst, ob eine Datei ein als sicher oder ein als unsicher eingestuftes Dateiformat aufweist. Beispielsweise werden Dateiformate, die ausführbare Komponenten beinhalten können, wie zum Beispiel Makros oder dergleichen, als unsicher eingestuft. Eine von dem Signiermodul als unsicher eingestufte Datei wird einem Konvertermodul übergeben, um die Datei in ein als sicher eingestuftes Format umzuwandeln. Die Datei wird nach ihrer Konvertierung von dem Signiermodul maschinell signiert, so dass sie in das Netzwerk eingespeist werden kann.

Das Signiermodul kann als separate Hardware-Komponente ausgebildet sein oder auch als eine Programm-Komponente, die von einem Prozessor des Netzwerkknotens oder des Konvertermoduls ausgeführt wird. Beispielsweise können der Netzwerkknoten, das Signiermodul und der Konverter als ein oder mehrere Hardware-Einheiten, zum Beispiel als Prozessor-Karte(n) ausgebildet sein.

Die Erfindung eignet sich besonders für die Erfüllung der technischen und organisatorischen Maßnahmen zum Schutz personenbezogener Daten, so wie sie im § 9 des Bundesdatenschutzgesetzes und im Anhang zum dem § 9 des Bundesdatenschutzgesetzes gefordert werden. Beispielsweise kann die Erfindung zur Anbindung des Netzwerkes einer Arztpraxis oder des Netzwerks einer anderen medizinischen Einrichtung an ein übergeordnetes Netzwerk, wie zum Beispiel ein Virtual Private Network (VPN), ein Extranet oder auch das Internet verwendet werden.

Im weiteren werden bevorzugten Ausführungsbeispiele der Erfindung mit Bezugnahme auf die Zeichnungen näher erläutert. Es zeigen:
- Figur 1: ein Blockdiagramm einer Ausführungsform eines erfindungsgemäßen Geräts und eines erfindungsgemäßen Netzwerkknotens zur Eingabe von Dateien in ein Netzwerk,
- Figur 2: ein Flussdiagramm einer Ausführungsform eines erfindungsgemäßen Verfahrens zur Eingabe einer signierten Datei in das Netzwerk,
- Figur 3: ein Flussdiagramm einer Ausführungsform eines erfindungsgemäßen Verfahrens zur Eingabe einer von einem nicht zertifizierten Gerät empfangenen, unsignierten Datei in das Netzwerk,
- Figur 4: eine Ausführungsform eines Konverters zur automatischen Konvertierung einer von einem nicht zertifizierten Gerät empfangenen Datei und zur Signierung der konvertierten Datei,
- Figur 5: ein Flussdiagramm zur Darstellung der Arbeitsweise des Konverters der Figur 4,
- Figur 6: verschiedene miteinander verknüpfte Netzwerke, die gegen unerwünschte Daten geschützt sind,
- Figur 7: ein Blockdiagramm einer weiteren Ausführungsform mit einem Signiermodul.

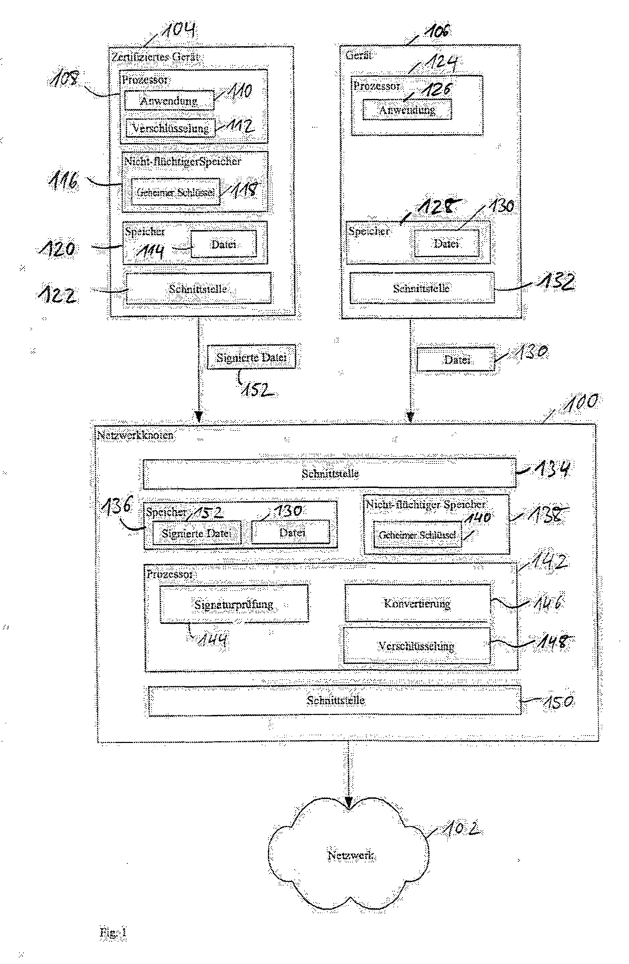

Die Figur 1 zeigt ein Blockdiagramm eines Netzwerkknotens 100. Der Netzwerkknoten 100 gehört zu einem Netzwerk 102, welches gegen unerwünschte Daten geschützt werden soll. Der Netzwerkknoten 100 kann zum Beispiel von einem zertifizierten Gerät 104, welches zur Teilnahme an einer PKI zugelassen ist, sowie auch von einem nicht zertifizierten Gerät 106 Daten empfangen.

Das zertifizierte Gerät 104 hat zumindest einen Prozessor 108 zur Ausführung eines Anwendungsprogramms 110 und eines Verschlüsselungsprogramms 112 zur digitalen Signierung einer Datei 114 mit Hilfe eines in einem nicht-flüchtigen Speicher 116 gespeicherten geheimen Schlüssels 118, der dem zertifizierten Gerät 104 fest zugeordnet ist. Beispielsweise können zumindest Teile des Anwendungsprogramms 110 und / oder des Verschlüsselungsprogramms 112 als so genannte Firmware realisiert sein. In diesem Fall kann der geheime Schlüssel 118 als Teil der Firmware gespeichert sein.

Ferner kann der nicht-flüchtige Speicher 116 bzw. die Firmware zur Speicherung einer eindeutigen Gerätekennung des zertifizierten Geräts und / oder eines PKI Zertifikats dienen. Ein solches Zertifikat beinhaltet eine Angabe zu der Identität des zertifizierten Teilnehmers, das heißt hier des zertifizierten Geräts 104 und den zu dem geheimen Schlüssel 118 gehörigen öffentlichen Schlüssel oder eine Angabe eines Verzeichnisses, von dem der öffentliche Schlüssel gelesen werden kann. Vorzugsweise beinhaltet das Zertifikat die Kennung des zertifizierten Geräts 104 als Teilnehmerangabe an der PKI.

Das zertifizierte Gerät 104 hat ferner eine Schnittstelle 122 zur Kommunikation mit dem Netzwerkknoten 100.

Bei dem zertifizierten Gerät 104 handelt es sich beispielsweise um ein medizintechnisches Gerät. In diesem Fall dient das Anwendungsprogramm 110 zur Erzeugung beispielsweise einer Bilddatei, wie zum Beispiel im Format TIFF, Bitmap, JPEG, PDF, MPEG oder DICOM. Je nach Anwendungsfall können auch andere Dateiformate erzeugt werden, die verschiedene diagnostische Daten beinhalten können.

Das Gerät 106 ist nicht für die Teilnahme an der PKI zertifiziert und hat dementsprechend auch kein zugeordnetes Schlüsselpaar. Das Gerät 106 hat zumindest einen Prozessor 124 zur Durchführung eines Anwendungsprogramms 126 sowie einen Speicher 128, wie zum Beispiel einen Arbeitsspeicher, zur Speicherung einer von dem Anwendungsprogramm 126 erzeugten Datei 130 und einer Schnittstelle 132 zur Kommunikation zwischen dem Gerät 106 und dem Netzwerkknoten 100.

Der Netzwerkknoten 100 hat eine Schnittstelle 134 für den Empfang von Daten von dem zertifizierten Gerät 104 und dem Gerät 106. Ferner hat der Netzwerkknoten 100 einen Speicher 136 zur Speicherung von empfangenen Dateien sowie einen nicht-flüchtigen Speicher 138 zur Speicherung eines geheimen Schlüssels 140. Der geheime Schlüssel 140 ist einer Konvertierungsfunktion des Netzwerkknotens 100 zugeordnet. Diese kann durch ein Konvertierungs-Programm und / oder ein Hardware-Konvertierungsmodul, welches an dem Netzwerkknoten 100 angeschlossen ist, durchgeführt werden. Das Konvertierungsprogramm bzw. das Konvertierungsmodul sind für die Teilnahme an der PKI zertifiziert und haben ein entsprechendes Schlüsselpaar.

Der Netzwerkknoten 100 hat einen Prozessor 142 zur Ausführung einer Programmkomponente 144 zur Überprüfung der Echtheit einer digital signierten Datei, eine Programmkomponente 146 für die automatische Konvertierung einer von dem Gerät 106 empfangenen unsignierten Datei sowie eine Programmkomponente 148 zur Signierung einer durch Konvertierung mittels der Programmkomponente 146 erhaltenen Datei mit dem geheimen Schlüssel 140.

Der Netzwerkknoten 100 hat ferner eine Schnittstelle 150 zur Verbindung mit dem Netzwerk 102. Die Schnittstellen 134 und 150 können als eine bauliche Einheit ausgeführt sein.

Im Betrieb erzeugt das Anwendungsprogramm 110 des zertifizierten Geräts 104 die Datei 114, die in den Speicher 120 gespeichert wird. Nachdem die Datei 114 erzeugt worden ist, wird das Verschlüsselungsprogramm 112 gestartet, welches die Datei 114 mit Hilfe des geheimen Schlüssels 118 digital signiert. Die aus der Datei 114 erzeugte signierte Datei 152 wird von der Schnittstelle 122 des zertifizierten Geräts 104 zu der Schnittstelle 134 des Netzwerkknotens 100 übertragen. Dies kann über eine drahtgebundene oder drahtlose Verbindung erfolgen oder durch Abspeicherung der signierten Datei 152 auf einen Datenträger, der durch die Netzwerkkomponente 100 eingelesen werden kann.

Die von dem Netzwerkknoten 100 empfangene signierte Datei 152 wird in dem Speicher 136 gespeichert. Durch den Empfang der signierten Datei 152 wird die Programmkomponente 144 des Netzwerkknotens 100 gestartet, um die Echtheit der digitalen Signatur der signierten Datei 152 zu überprüfen. Zur Überprüfung der Echtheit der Signatur greift die Programmkomponente 144 auf den zu dem geheimen Schlüssel 118 gehörenden öffentlichen Schlüssel zu.

Beispielsweise hat die signierte Datei 152 ein Zertifikat, welches den öffentlichen Schlüssel beinhaltet. Alternativ oder zusätzlich beinhaltet das Zertifikat eine Angabe der Kennung des zertifizierten Geräts 104 sowie einen Verweis auf ein so genanntes Directory, von dem der öffentliche Schlüssel des zertifizierten Geräts 104 abgerufen werden kann. Hierzu stellt die Programmkomponente 144 eine Verbindung mit dem Directory her und sendet eine Anforderung mit der Kennung des zertifizierten Geräts an das Directory, um den zu der Kennung gehörenden öffentlichen Schlüssel von dem Directory zu erhalten.

Wenn die Prüfung der Signatur der signierten Datei 152 ergibt, dass diese echt ist, so gibt die Programmkomponente 144 die signierte Datei 152 zur Eingabe in das Netzwerk 102 frei. Die signierte Datei 152 kann sodann über die Schnittstelle 150 in das Netzwerk 102 eingespeist werden.

Im Betrieb des Geräts 106 erzeugt das Anwendungsprogramm 126 die Datei 130. Beispielsweise handelt es sich bei dem Gerät 106 um eine digitale Kamera oder ein digitales Diktiergerät. Nachdem die entsprechende Bild- oder Sprachdatei 130 erzeugt worden ist, wird diese über die Schnittstelle 132 zu dem Netzwerkknoten 100 übertragen. Dies kann über eine drahtgebundene oder drahtlose Verbindung oder mittels eines Datenträgers erfolgen.

Nach Empfang der unsignierten Datei 130 durch den Netzwerkknoten 100 wird die unsignierte Datei 130 in den Speicher 136 gespeichert. Daraufhin wird die Programmkomponente 146 gestartet, welche die Datei 130 automatisch in eine sichere Form konvertiert. Die konvertierte Datei 130 wird sodann durch die Programmkomponente 148 mit Hilfe des geheimen Schlüssels 140 automatisch digital signiert und danach zur Einspeisung über die Schnittstelle 150 in das Netzwerk 102 freigegeben.

Die Entscheidung, ob es sich bei einer an der Schnittstelle 134 empfangenen Datei um eine signierte oder um eine unsignierte Datei handelt, kann zum Beispiel anhand des empfangenen Datenformats vorgenommen werden. Wenn beispielsweise die empfangene Datei ein angehängtes Zertifikat hat, so wird diese Datei als signierte Datei verarbeitet; wenn die Datei hingegen nicht ein solches angehängtes Zertifikat hat, so erfolgt die automatische Konvertierung und nachfolgende Verschlüsselung.

Für den Fall, dass die signierte Datei 152 nicht die Echtheitsprüfung durch die Programmkomponente 144 besteht, kann der Netzwerkknoten 100 ein entsprechendes Signal an das zertifizierte Gerät 104 übertragen und / oder an einen Nutzer an den die signierte Datei 152 adressiert ist.

Wenn es sich bei der Datei 114 um Massendaten handelt, wie zum Beispiel eine Bilddatei, so wird vorzugsweise zur digitalen Signierung der Datei 114 wie folgt vorgegangen: Aus der Datei 114 wird mit Hilfe einer so genannten Faltungsfunktion, das heißt einer HASH-Funktion, ein HASH-Wert generiert. Der HASH-Wert wird mit dem geheimen Schlüssel 118 verschlüsselt, so dass man die digitale Signatur erhält. An diese digitale Signatur wird gegebenenfalls das Zertifikat des Geräts 104 angehängt.

Die signierte Datei 152 beinhaltet also die Original-Datei 114, deren digitale Signatur sowie das Zertifikat.

Die Überprüfung der Echtheit der digitalen Signatur erfolgt durch die Programmkomponente 144 so, dass die digitale Signatur mit Hilfe des öffentlichen Schlüssels des zertifizierten Geräts 104 entschlüsselt wird. Ferner wird mit derselben HASH-Funktion ein HASH-Wert aus der empfangenen Datei gebildet. Stimmt dieser HASH-Wert mit dem aus der digitalen Signatur erhaltenen HASH-Wert überein, so ist die empfangene Datei authentisch.

Zum Schutz der Vertraulichkeit kann durch das Gerät oder den sendenden Netzwerkknoten eine zusätzliche Verschlüsselung erfolgen. Beispielsweise wird hierzu die Datei 114 mit dem öffentlichen Schlüssel des Empfängers, d.h. z.B. des empfangenden Netzwerkknotens 100 verschlüsselt. Dieser öffentliche Schlüssel wird von einer PKI für Vertraulichkeit bezogen. Dies kann aufgrund einer entsprechenden Nutzereingabe erfolgen oder automatisch durch das Gerät 104 bzw. den Netzwerkknoten.

Der Netzwerkknoten 100 hat insbesondere den Vorteil, dass aufgrund der Signatur der Datei 152 überprüft werden kann, ob die Datei 152 von einer zulässigen Datenquelle stammt, wobei hier unter Datenquelle dasjenige Gerät 104 verstanden wird, welches die unsignierte Datei 114 originär erzeugt hat. Diese Prüfung kann auch dann erfolgen, wenn zwischen der Datenquelle und dem Netzwerkknoten 100 eine Übertragungsstrecke mit einem Telekommunikations- oder Computernetzwerk liegt.

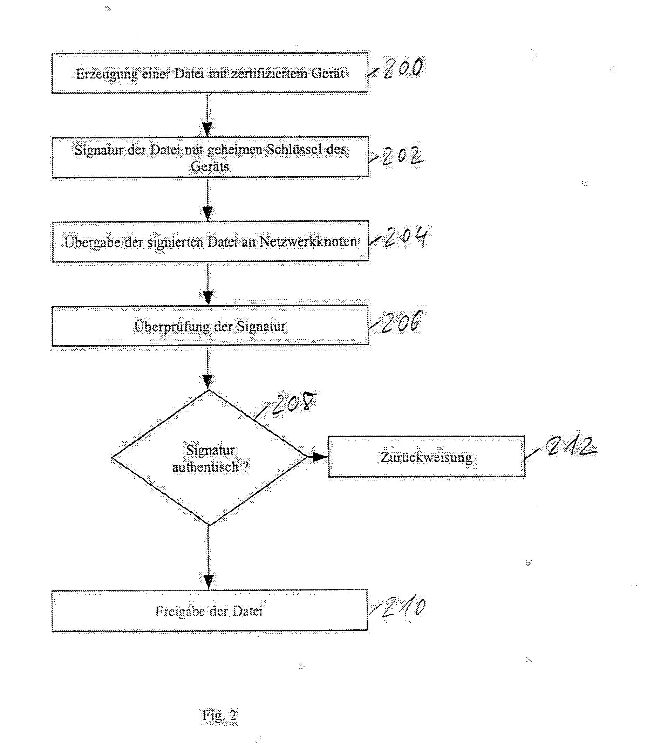

Die Figur 2 zeigt ein entsprechendes Flussdiagramm. In dem Schritt 200 wird eine Datei mit einem zertifizierten Gerät erzeugt. Bei der Datei kann es sich beispielsweise um ein digitales Röntgenbild oder um andere diagnostische Daten handeln. In dem Schritt 202 wird die Datei mit dem geheimen Schlüssel des zertifizierten Geräts automatisch signiert. Hierzu wird nach Erzeugung der Datei automatisch ein entsprechendes Verschlüsselungsprogramm gestartet, welches mit Hilfe des in dem nicht-flüchtigen Speicher des zertifizierten Geräts gespeicherten geheimen Schlüssels die digitale Signierung der Datei vornimmt.

In dem Schritt 204 wird die von dem zertifizierten Gerät signierte Datei an einen Netzwerkknoten übergeben. Der Netzwerkknoten überprüft daraufhin die digitale Signatur der Datei auf deren Authentizität. Hierzu greift der Netzwerkknoten auf den öffentlichen Schlüssel des zertifizierten Geräts zu, welches die Verschlüsselung vorgenommen hat.

Wenn die digitale Signatur der Datei authentisch ist (Schritt 208), wird die Datei von dem Netzwerkknoten zur Eingabe in das Netzwerk freigegeben (Schritt 210). Andernfalls weist der Netzwerkknoten die Datei zurück und verweigert die Einspeisung in das Netzwerk (Schritt 212).

Zur Signatur der Datei in dem Schritt 202 wird vorzugsweise wie folgt vorgegangen: Zunächst wird von dem zertifizierten Gerät aus der zu signierenden Datei ein HASH-Wert mit Hilfe einer vordefinierten HASH-Funktion erzeugt. Der HASH-Wert wird mit dem geheimen Schlüssel des Geräts signiert und die Signatur wird an die Datei angehängt.

Die resultierende signierte Datei besteht also aus der Datei, der digitalen Signatur sowie einem Zertifikat der digitalen Signatur. Das Zertifikat beinhaltet beispielsweise eine eindeutige Gerätekennung des zertifizierten Geräts, welche das zertifizierte Gerät als Teilnehmer an der PKI identifiziert. Ferner beinhaltet das Zertifikat den zu dem geheimen Schlüssel des zertifzierten Geräts passenden öffentlichen Schlüssel und /oder einen Verweis auf ein Directory, von dem dieser öffentliche Schlüssel abgerufen werden kann.

Zusätzlich kann mit einer weiteren geeigneten Verschlüsselung die Vertraulichkeit der Datei geschützt werden, indem z.B. die Datei mit einem öffentlichen Schlüssels eines Empfängers verschlüsselt wird.

Zur Überprüfung der Signatur in dem Schritt 206 wird wie folgt vorgegangen: Der Netzwerkknoten greift auf den öffentlichen Schlüssel des zertifizierten Geräts zu, indem der öffentliche Schlüssel entweder aus dem Zertifikat ausgelesen wird oder der Netzwerkknoten mit der Gerätekennung auf ein Directory zugreift, um von dort den der Gerätekennung zugeordneten öffentlichen Schlüssel abzurufen.

Mit Hilfe des öffentlichen Schlüssels wird die digitale Signatur der signierten Datei in einem asymmetrischen Entschlüsselungsverfahren entschlüsselt, so dass der Netzwerkknoten den HASH-Wert erhält. Aus der entschlüsselten Datei wird wiederum mit Hilfe der vordefinierten HASH-Funktion ein HASH-Wert gebildet. Stimmt dieser HASH-Wert mit dem in der digitalen Signatur angegebenen HASH-Wert überein, so ist die Signatur authentisch und die signierte Datei kann zur Einspeisung in das Netzwerk zugelassen werden.

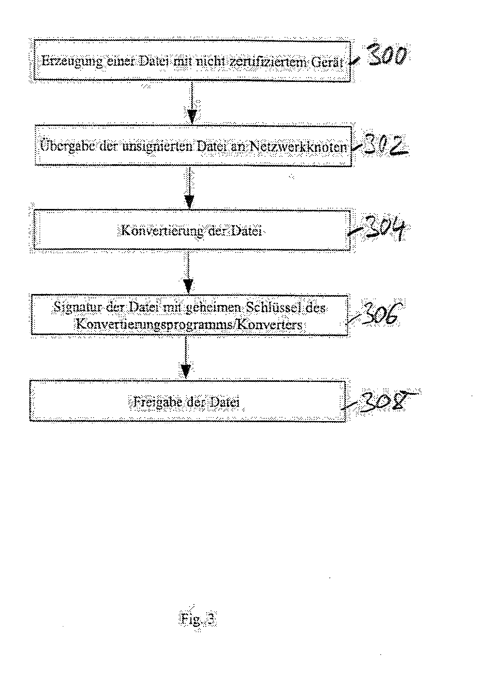

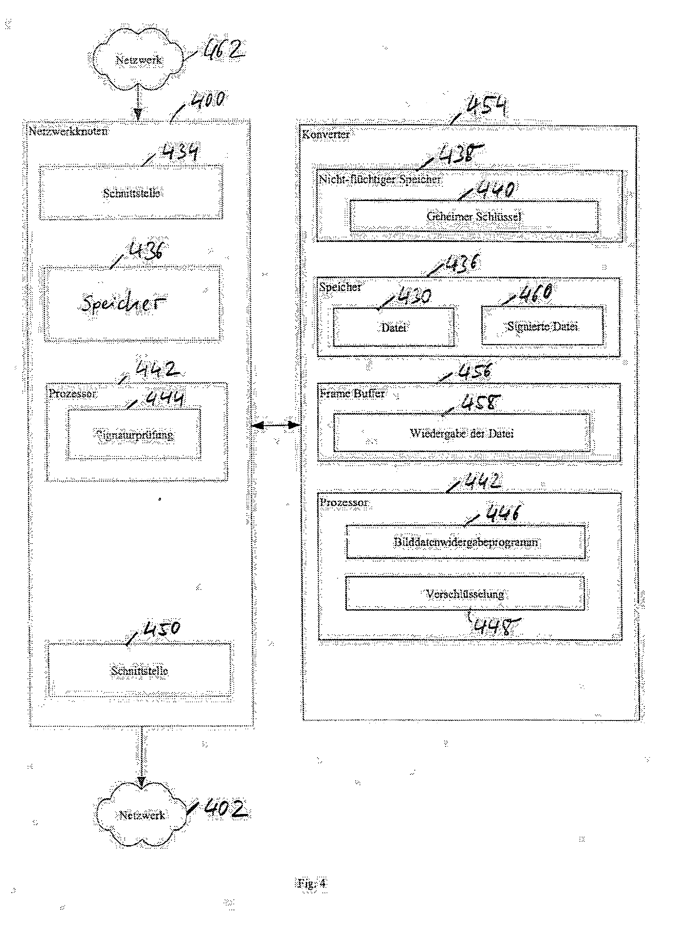

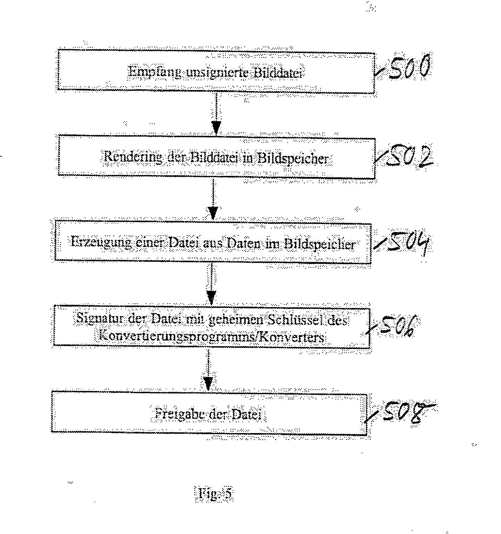

Die Figur 3 zeigt ein entsprechendes Verfahren für die Einspeisung einer Datei von einem nicht zertifizierten Gerät. In dem Schritt 300 wird eine Datei mit einem nicht zertifizierten Gerät erzeugt. Beispielsweise handelt es sich bei dem nicht zertifizierten Gerät um eine handelsübliche digitale Kamera, ein digitales Diktiergerät oder ein anderes Gerät, welches Dateien erzeugen kann. Nach der Erzeugung der Datei durch das nicht zertifizierte Gerät wird die unsignierte Datei an den Netzwerkknoten übergeben (Schritt 302). In dem Schritt 304 wird von dem Netzwerkknoten erkannt, dass die Datei unsigniert ist. Daraufhin wird die Datei konvertiert, um sicherzustellen, dass die Datei keine unerwünschten Inhalte, insbesondere Computerviren, hat. Eine Ausführungsform für eine entsprechende Konvertierungsfunktion wird mit Bezugnahme auf die Figuren 4 und 5 noch näher erläutert.

Die konvertierte Datei wird mit dem geheimen Schlüssel des Konvertierungsprogramms bzw. des Konverters digital signiert. In dem Schritt 308 wird die signierte und konvertierte Datei zur Eingabe in das Netzwerk von dem Netzwerkknoten freigegeben.

Die Figur 4 zeigt ein Ausführungsbeispiel für einen Konverter 454, der zur Konvertierung einer unsignierten von einem nicht zertifizierten Gerät empfangenen Datei und Signierung der konvertierten Datei dient. Der Konverter 454 ist in dem hier betrachteten Ausführungsbeispiel als Hardware-Komponente ausgebildet, die mit dem Netzwerkknoten 400, der die Datei empfängt, verbunden ist. Elemente der Figur 4, die Elementen der Figur 1 entsprechen, sind mit entsprechenden Bezugszeichen gekennzeichnet.

Bei dem Konverter 454 handelt es sich um ein zertifiziertes Gerät, das zur Teilnahme an der PKI zugelassen ist. Der Konverter 454 hat einen geheimen Schlüssel 440 der in dem nicht-flüchtigen Speicher 438 gespeichert ist. Die von dem Netzwerkknoten 400, an den der Konverter 454 angeschlossen ist, empfangene Datei 430 wird in dem Speicher 436 des Konverters 454 gespeichert.

In der hier betrachteten Ausführungsform handelt es sich bei der Datei 430 um eine Bilddatei, beispielsweise im Format TIFF, PDF oder JPEG.

Der Prozessor 442 des Konverters 454 dient zur Ausführung eines Bilddaten-Wiedergabeprogramms 446 sowie eines Verschlüsselungsprogramms 448. Der Konverter 454 hat ferner einen Bildspeicher, das heißt einen so genannten Frame Buffer 456 zur Speicherung einer Wiedergabe der Datei 430.

Nach Empfang der Datei 430 und Speicherung der Datei 430 in dem Speicher 436 des Konverters 454 wird automatisch das Bilddaten-Wiedergabeprogramm 446 gestartet. Bei dem Bilddaten-Wiedergabeprogramm 446 handelt es sich um ein so genanntes Rendering-Programm, welches die Datei 430 entpackt und decodiert, um daraus Bilddaten zu generieren, die als Wiedergabe der Datei 458, das heißt als so genanntes Rendering der Datei, in den Frame Buffer 456 gespeichert werden. Die so erhaltenden Bilddaten, das heißt die Wiedergabe der Datei 458, wird dann mit der Programmkomponente 448 mit dem geheimen Schlüssel 440 digital signiert und zur Einspeisung in das Netzwerk freigegeben.

In dem hier betrachteten Ausführungsbeispiel empfängt der Netzwerkknoten 400 die Datei 430 von einer Datenquelle über ein Netzwerk 462. Entsprechend ist die Schnittstelle 434 als Netzwerk-Schnittstelle ausgebildet. Die von dem Konverter 454 signierte Datei 460 wird von dem Konverter 454 an den Netzwerkknoten 400 übergeben und von diesem über dessen Schnittstelle 450 in das Netzwerk 402 eingespeist.

Die Figur 5 zeigt ein entsprechendes Flussdiagramm. In dem Schritt 500 wird eine unsignierte Bilddatei empfangen. Zur Konvertierung der unsignierten Bilddatei erfolgt zunächst ein Rendering der Bilddatei in dem Schritt 502. Die aufgrund des Rendering der Bilddatei erhaltenen Bilddaten werden in dem Bildspeicher abgespeichert. In dem Schritt 504 wird eine Datei aus den im Bildspeicher gespeicherten Daten generiert. Bei dieser Datei handelt es sich vorzugsweise um ein übliches Bilddaten-Format, wie zum Beispiel TIFF, PDF, JPEG oder auch Bitmap.

In dem Schritt 506 wird die in dem Schritt 504 erzeugte Datei mit dem geheimen Schlüssel des Konvertierungsprogramms (vgl. Programmkomponente 146 der Figur 1) bzw. des Konverters (vgl. Konverter 454 der Figur 4) signiert. In dem Schritt 508 erfolgt die Freigabe der konvertierten und signierten Datei zur Einspeisung in das Netzwerk.

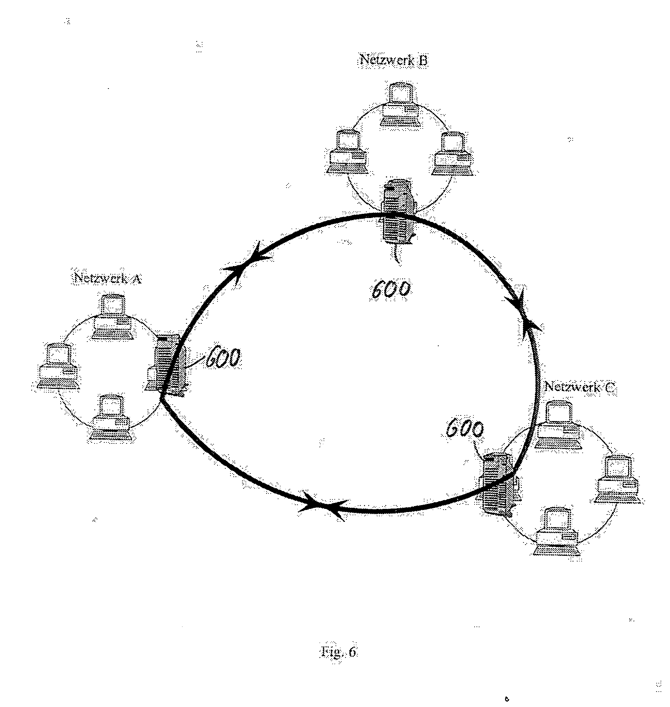

Die Figur 6 zeigt ein verteiltes Datenverarbeitungssystem mit verschiedenen Netzwerken A, B und C. Jedes der Netzwerke A, B und C hat jeweils einen Netzwerkknoten 600, der entsprechend dem Netzwerkknoten 100 der Figur 1 aufgebaut ist. Über die Netzwerkknoten 600 sind die Netzwerke A, B und C miteinander verknüpft, beispielsweise durch ein so genanntes Virtual Private Network (VPN). Beispielsweise handelt es sich bei dem Netzwerk A um das Netzwerk einer Arztpraxis, bei dem Netzwerk B um das Netzwerk eines medizinischen Analyselabors und bei dem Netzwerk C um das Netzwerk eines Krankenhauses. Eine größere Anzahl weiterer Netzwerke kann auf diese Art und Weise mit eingebunden werden.

Wenn beispielsweise eine Datei von dem Netzwerk A zu dem Netzwerk C übertragen werden soll, so werden der Netzwerkknoten 600 des Netzwerks A und / oder der Netzwerkknoten 600 des Netzwerks C die Datei auf deren Zulässigkeit hin überprüfen. Für eine signierte Datei bedeutet dies, dass die Echtheit der digitalen Signatur überprüft wird. Für eine unsignierte Datei bedeutet dies, dass diese nach Konvertierung digital signiert wird.

Zur Einspeisung von Dateien über einen der Arbeitsplatzrechner der Netzwerke A, B oder C kann auf jedem Arbeitsplatzrechner ein Programm installiert sein, welches zur Überprüfung der Zulässigkeit der auf einem Datenträger gespeicherten Datei zur Einspeisung in eines der Netzwerke dient. Die Prüfung kann dabei vollständig lokal auf dem Arbeitsplatzrechner vorgenommen werden oder unter zumindest teilweiser Verwendung des betreffenden Netzwerkknotens 600.

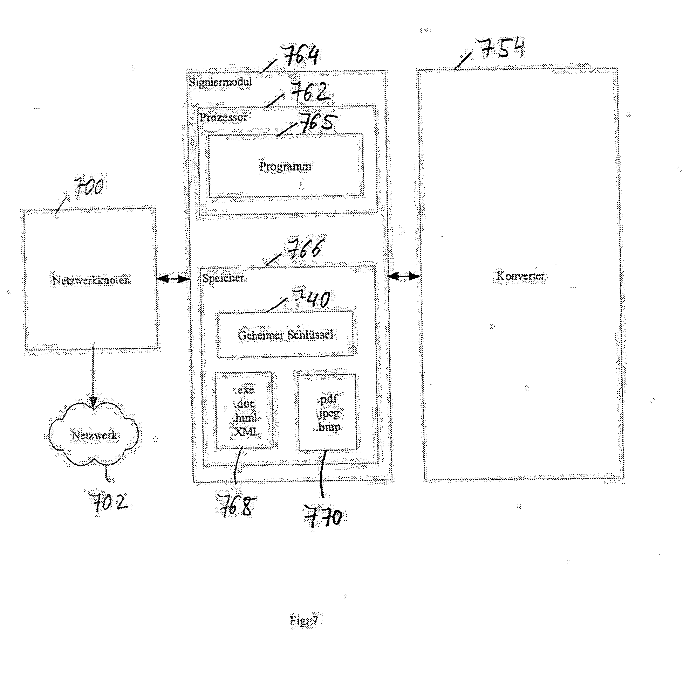

Die Figur 7 zeigt ein Blockdiagramm einer weiteren Ausführungsform mit einem Signiermodul. Elemente der Figur 7, die Elementen der Figuren 1, 4 oder 6 entsprechen, sind mit entsprechenden Bezugszeichen gekennzeichnet.

In der Ausführungsform der Figur 7 ist der Netzwerkknoten 700 mit einem Signiermodul 764 verbunden. Das Signiermodul 764 hat einen Prozessor 762 zur Ausführung eines Programms 765. Ferner hat das Signiermodul 764 einen Speicher 766 zur Speicherung eines geheimen Schlüssels 740, welcher zur digitalen Signierung als sicher eingestufter bzw. konvertierter Dateien dient. Ferner hat der Speicher 766 einen Speicherbereich 768 zur Speicherung von Dateiformaten, die als unsicher eingestuft sind und einen Speicherbereich 770 zur Speicherung von Dateiformaten, die als sicher eingestuft sind.

Wenn der Netzwerkknoten 700 eine signierte Datei empfängt, so wird die Signatur der Datei überprüft, wie oben insbesondere mit Bezugnahme auf die Figuren 1 und 2 erläutert. Falls die Signatur authentisch ist, wird die signierte Datei zur Eingabe in das Netzwerk 702 freigegeben; wenn das Gegenteil der Fall ist, wird die signierte Datei von dem Netzwerkknoten 700 zurückgewiesen.

Wenn der Netzwerkknoten 700 eine unsignierte Datei empfängt, so wird die unsignierte Datei von dem Netzwerkknoten 700 an das Signiermodul 764 übergeben. Das Programm 765 des Signiermoduls 764 prüft dann, ob das Dateiformat der unsignierten Datei als sicher oder unsicher einzustufen ist, indem es auf die Speicherbereiche 768 bzw. 770 zugreift. Wenn die unsignierte Datei beispielsweise das Format PDF, JPEG oder BMP hat, so wird die Datei als sicher eingestuft und von dem Programm 765 mit dem geheimen Schlüssel 740 signiert. Die Datei wird dann von dem Signiermodul 764 an den Netzwerkknoten 700 übergeben, welcher die signierte Datei in das Netzwerk 702 einspeist.

Wenn die Datei hingegen beispielsweise das Format .EXE, DOC, HTML oder XML hat, so wird die Datei von dem Programm 765 als unsicher eingestuft und dem Konverter 754 übergeben. Der Konverter 754 konvertiert die Datei in eines der als sicher betrachteten Dateiformate und übergibt die konvertierte Datei an das Signiermodul 764, welches daraufhin die konvertierte Datei mit dem geheimen Schlüssel 740 signiert und an den Netzwerkknoten 700 zur Einspeisung in das Netzwerk 702 weitergibt. Wenn das Dateiformat der empfangenen Datei keinen der in den Speicherbereichen 768 und 770 abgelegten Dateiformate entspricht, so kann die Datei von dem Signiermodul 764 zurückgewiesen werden, so dass keine Einspeisung der Datei in das Netzwerk 702 erfolgt.

Der Netzwerkknoten 700, das Signiermodul 764 und der Konverter 754 können durch eine einzige oder mehrere miteinander verknüpfte Hardware-Einheiten, wie zum Beispiel Prozessor-Karten, realisiert werden.

### Bezugszeichenliste

- 100: Netzwerkknoten
- 102: Netzwerk
- 104: Gerät
- 106: Gerät
- 108: Prozessor
- 110: Anwendungsprogramm
- 112: Verschlüsselungsprogramm
- 114: Datei
- 116: Speicher
- 118: geheimer Schlüssel
- 120: Speicher
- 122: Schnittstelle
- 124: Prozessor
- 126: Anwendungsprogramm
- 128: Speicher
- 130: Datei
- 132: Schnittstelle
- 134: Schnittstelle
- 136: Speicher
- 138: Speicher
- 140: geheimer Schlüssel
- 144: Programmkomponente
- 146: Programmkomponente
- 148: Programmkomponente
- 150: Schnittstelle
- 152: signierte Datei
- 436: Speicher
- 438: Speicher
- 440: geheimer Schlüssel
- 442: Prozessor
- 446: Bilddaten-Wiedergabeprogramm
- 448: Programmkomponente
- 454: Konverter
- 456: Frame Buffer
- 458: Wiedergabe
- 460: signierte Datei
- 462: Netzwerk
- 600: Netzwerkknoten
- 700: Netzwerkknoten
- 702: Netzwerk
- 754: Konverter
- 762: Prozessor
- 764: Signiermodul
- 765: Programm
- 766: Speicher
- 768: Speicherbereich
- 770: Speicherbereich

## Patentansprüche

1. Netzwerkknoten zur Verknüpfung mit einem Netzwerk (102), wobei das Netzwerk (102) eine erste Datenquelle (104) und eine zweite Datenquelle (106) aufweist, mit:
- Mitteln (134) zum Empfang einer Datei (152) von der ersten Datenquelle (104), wobei die Datei mit Hilfe einer geheimen Signaturkomponente (118) der Datenquelle maschinell signiert ist,
- Mitteln (144) zur Überprüfung der Echtheit der Signatur,
- Mitteln (150) zur Eingabe der Datei in das Netzwerk, wenn die Signatur echt ist,
- Mitteln (134) zum Empfang einer unsignierten Datei (130; 430) von der zweiten Datenquelle (106),
- Mitteln (146; 446, 456) zur Konvertierung der unsignierten Datei und **dadurch** Erzeugung einer konvertierten Datei, wobei es sich bei der Datei um eine Bilddatei handelt, wobei die Mittel (146; 446, 456) zur Konvertierung einen Bildspeicher umfassen, wobei die Mittel (146; 446, 456) zur Konvertierung dazu ausgebildet sind die Bilddatei durch ein Rendering zu konvertieren, die aufgrund des Renderings der Bilddatei erhaltenen Bilddaten in dem Bildspeicher abzuspeichern und die konvertierte Datei aus den im Bildspeicher gespeicherten Daten zu generieren,
- Speichermitteln (140; 440) zur Speicherung eines geheimen Schlüssels (140; 440),
- Mitteln (448) zur Signierung der konvertierten Datei mit dem geheimen Schlüssel (140; 440),
- Mitteln (150) zur Eingabe der signierten und konvertierten Datei in das Netzwerk.

2. Netzwerkknoten nach Anspruch 1, mit Mitteln (446) zur Wiedergabe der unsignierten Datei, Speichermitteln (456) zur Speicherung der durch die Wiedergabe der unsignierten Datei erhaltenen Daten (458) und Mitteln (448) zur Erzeugung der konvertierten Datei aus den durch die Wiedergabe erhaltenen Daten.

3. Netzwerkknoten nach Anspruch 1, wobei es sich bei der ersten Datenquelle um ein medizintechnisches Gerät handelt.

4. Verfahren zur Eingabe einer Datei (130, 152) von einer Datenquelle in ein Netzwerk (102) mit folgenden Schritten:
- Überprüfung, ob die Datei mit Hilfe einer geheimen Signaturkomponente der Datenquelle signiert ist oder unsigniert ist, wobei es sich bei der Datei um eine Bilddatei handelt,
- für den Fall, dass die Datei signiert ist, Überprüfung der Echtheit der Signatur und Eingabe in das Netzwerk, wenn die Signatur echt ist,
- für den Fall, dass die Datei unsigniert ist, Konvertierung der Datei, Signierung der konvertierten Datei mit einem geheimen Schlüssel (140; 440) und Eingabe der signierten konvertierten Datei in das Netzwerk, wobei die Konvertierung der Datei (130, 152) umfasst
- Konvertierung der Bilddatei durch ein Rendering
- Abspeichern der aufgrund des Renderings der Bilddatei erhaltenen Bilddaten in einem Bildspeicher
- Generierung der konvertierten Datei aus den im Bildspeicher gespeicherten Daten.

5. Verfahren nach Anspruch 4, wobei eine unsignierte Datei nur dann konvertiert wird, wenn die unsignierte Datei ein als unsicher eingestuftes Dateiformat hat.

6. Verfahren nach Anspruch 4 oder 5, wobei die Datei (114) von einem medizintechnischen Gerät stammt, welches einen nicht-flüchtigen Speicher (116) mit einem dem Gerät zugeordneten Schlüssel (118) aufweist, und die Datei mit dem Schlüssel signiert ist.

7. Verfahren nach Anspruch 6, wobei das Gerät eine eindeutige Gerätekennung aufweist und der Schlüssel der Gerätekennung fest zugeordnet ist.

8. Computerprogrammprodukt, wobei das Computerprogrammprodukt mittels eines Prozessors ausführbar ist, wobei das Computerprogrammprodukt zur Ausführung der Schritte des Verfahrens nach einem der vorhergehenden Ansprüche 4 bis 7 ausgebildet ist

## Claims

1. Network node for linking to a network (102), wherein the network (102) has a first data source (104) and a second data source (106), having:
- means (134) for receiving a file (152) from the first data source (104), wherein the file has been automatically signed using a secret signature component (118) from the data source,
- means (144) for checking the genuineness of the signature,
- means (150) for inputting the file into the network if the signature is genuine,
- means (134) for receiving an unsigned file (130; 430) from the second data source (106),
- means (146; 446, 456) for converting the unsigned file and thereby producing a converted file, wherein the file is an image file, wherein the means (146; 446, 456) for conversion comprise an image memory, wherein the means (146; 446, 456) for conversion are designed to convert the image file by rendering, to store the image data obtained from rendering the image file in the image memory and to generate the converted file from the data stored in the image memory,
- memory means (140, 440) for storing a secret key (140; 440),
- means (448) for signing the converted file using the secret key (140; 440),
- means (150) for inputting the signed and converted file into the network.

2. Network node according to Claim 1, having means (446) for reproducing the unsigned file, memory means (456) for storing the data (458) obtained by reproducing the unsigned file and means (448) for producing the converted file from the data obtained by reproduction.

3. Network node according to Claim 1, wherein the first data source is a medical engineering appliance.

4. Method for inputting a file (130, 152) from a data source into a network (102), having the following steps:
- a check is performed to determine whether the file has been signed using a secret signature component from the data source or is unsigned, wherein the file is an image file,
- if the file has been signed then the genuineness of the signature is checked and the file is input into the network if the signature is genuine,
- if the file is unsigned then the file is converted, the converted file is signed using a secret key (140; 440) and the signed converted file is input into the network, wherein the conversion of the file (130, 152) comprises
- converting the image file by rendering,
- storing the image data obtained from rendering the image file in an image memory,
- generating the converted file from the data stored in the image memory.

5. Method according to Claim 4, wherein an unsigned file is converted only if the unsigned file has a file format classified as unsafe.

6. Method according to Claim 4 or 5, wherein the file (114) comes from a medical engineering appliance which has a non-volatile memory (116) having a key (118) which is associated with the appliance, and the file has been signed using the key.

7. Method according to Claim 6, wherein the appliance has an explicit appliance identifier and the key is permanently associated with the appliance identifier.

8. Computer program product, wherein the computer program product can be executed by means of a processor, wherein the computer program product is designed to perform the steps of the method according to one of the preceding Claims 4 to 7.

## Revendications

1. Noeuds de réseau destinés à être reliés à un réseau (102), le réseau (102) comprenant une première source de données (104) et une seconde source de données (106), comprenant :
- des moyens (134) destinés à recevoir un fichier (152) de la première source de données (104), dans lequel le fichier est automatiquement signé à l'aide d'un composant de signature secret (118) de la source de données,
- des moyens (144) destinés à vérifier l'authenticité de la signature,
- des moyens (150) destinés à la fourniture en entrée du fichier au réseau si la signature est authentique,
- des moyens (134) destinés à recevoir un fichier non signé (130 ; 430) de la deuxième source de données (106),
- des moyens (146 ; 446, 456) destinés à convertir le fichier non signé et ainsi, à produire un fichier converti, dans lequel le fichier est un fichier image, dans lequel les moyens (146 ; 446, 456) de conversion comprennent une mémoire d'image, dans lequel les moyens (146 ; 446, 456) de conversion sont conçus pour convertir le fichier image par rendu, pour stocker en mémoire les données d'image obtenues par rendu du fichier image et pour générer le fichier converti à partir des données stockées dans la mémoire d'image,
- des moyens de stockage (140 ; 440) destinés à stocker une clé secrète (140 ; 440),
- des moyens (448) destinés à signer le fichier converti au moyen de la clé secrète (140 ; 440),
- des moyens (150) destinés à la fourniture en entrée du fichier signé et converti au réseau.

2. Noeuds de réseau selon la revendication 1, comprenant des moyens (446) destinés à la reproduction du fichier non signé, des moyens de stockage (456) destinés à stocker les données (458) obtenues par reproduction du fichier non signé et des moyens (448) destinés à produire le fichier converti à partir des données obtenues par la reproduction.

3. Noeuds de réseau selon la revendication 1, dans lesquels la première source de données est un dispositif médical.

4. Procédé destiné à la fourniture en entrée d'un fichier (130, 152) d'une source de données dans un réseau (102), comprenant les étapes suivantes :
- vérifier, à l'aide d'un composant de signature secrète de la source de données, si le fichier est signé ou non signé, le fichier étant un fichier image,
- dans le cas où le fichier est signé, vérifier l'authenticité de la signature et le fournir en entrée au réseau si la signature est authentique,
- dans le cas où le fichier n'est pas signé, convertir le fichier, signer le fichier converti à l'aide d'une clé secrète (140 ; 440) et fournir en entrée le fichier converti et signé au réseau, la conversion du fichier (130, 152) consistant à :
- convertir le fichier image par rendu,
- stocker les données d'image obtenues sur la base du rendu du fichier image dans une mémoire d'image,
- générer le fichier converti à partir des données stockées dans la mémoire d'image.

5. Procédé selon la revendication 4, dans lequel le fichier non signé ne peut être converti que si le fichier non signé possède un format de fichier considéré comme étant non sécurisé.

6. Procédé selon la revendication 4 ou 5, dans lequel le fichier (114) provient d'un dispositif médical qui comprend une mémoire non volatile (116) comportant une clé (118) associée au dispositif et dans lequel le fichier est signé au moyen de la clé.

7. Procédé selon la revendication 6, dans lequel le dispositif comprend un identificateur de dispositif unique et la clé est associée de manière fixe à l'identifiant de dispositif.

8. Produit de programme informatique, le produit de programme informatique pouvant être mis en oeuvre au moyen d'un processeur, dans lequel le produit de programme informatique est conçu pour exécuter les étapes du procédé selon l'une des revendications 4 à 7 précédentes.
